# EUROPEAN PATENT APPLICATION

(11) **EP 2 130 791 A1**
(43) Date of publication of application: **09.12.2009**
(21) Application number: 08739572.9
(22) Date of filing: 01.04.2008
(51) Int. Cl.: B65G 47/14, B23P 19/00, B65G 43/00, H05F 3/00

(54) **NEUTRALIZATION APPARATUS AND METHOD FOR PART FEEDER**

(30) Priority: 04.04.2007 JP 2007098405
(71) Applicant: Sanki Company Limited, Minato-ku Nagoya-shi Aichi 455-0021 (JP)
(72) Inventor: HIRANO, Akihide, Nagoya-shi Aichi 455-0021 (JP); ISHIYAMA, Tomoyuki, Tokyo 114-0032 (JP)
(74) Representative: Papa, Elisabetta
(86) International application number: PCT/JP2008/056459
(87) International publication number: WO 2008/123518

(57) **Abstract**

The present invention has an object to provide a device and a method for eliminating static electricity for a parts feeder that can effectively eliminate static electricity on workpieces W in lightweight granular shape. To achieve the object, the present invention provides a device for eliminating static electricity for a parts feeder that eliminates static electricity on workpieces, the parts feeder including an in-line feeder IF that conveys granular workpieces W along a predetermined path, and a rotating drum D that continuously drops a small number of fed workpieces onto a predetermined position on the in-line feeder, the device including: at least a pair of electrodes E1 and E2 including a positive electrode and a negative electrode provided on the rotating drum near a predetermined position on the in-line feeder; a DC high voltage power supply P; and polarity voltage forming circuits 12, 13, 14, 15 and 16 that receive electric power from the power supply to form a polarity high voltage, and apply a positive voltage to the positive electrode and a negative voltage to the negative electrode, and a method therefor.

## Description

### BACKGROUND OF THE INVENTION

### Field of the Invention

The present invention relates to a device and a method for eliminating static electricity for a parts feeder, and more particularly to a device and a method for eliminating static electricity on workpieces conveyed by a parts feeder.

### Related Art

In a process of mounting components to an electronic device, components to be mounted are conveyed by a parts feeder and successively mounted to a circuit board. Such electronic components have been considerably reduced in size and weight with decreasing size of circuits, and when positively or negatively charged, the electronic components are statically absorbed to a contact surface of a parts feeder and become immovable.

Thus, effective elimination of static electricity on the electronic components, that is, workpieces is a challenge to the parts feeder, and various attempts for elimination of static electricity have been made. For example, a development has been made that plasma is applied to workpieces to expect neutralization of static charges on the workpieces by plasma ion (see Japanese Patent Laid-Open No. 2002-053221).

However, only application of the plasma ion does not always provide sufficient elimination of static electricity. Thus, a scheme for elimination of static electricity other than a plasma ion scheme has been desired.

### SUMMARY OF THE INVENTION

The present invention is achieved in view of the above described points, and has an object to provide a device and a method for eliminating static electricity for a parts feeder that can effectively eliminate static electricity on workpieces in lightweight granular shape.

To achieve the above described object, the present invention provides a device for eliminating static electricity for a parts feeder that eliminates static electricity on workpieces, the parts feeder including an in-line feeder that conveys granular workpieces along a predetermined path, and a rotating drum that continuously drops a small number of fed workpieces onto a predetermined position on the in-line feeder,
the device including:
at least a pair of electrodes including a positive electrode and a negative electrode provided on the rotating drum near a predetermined position on the in-line feeder;
a power supply that generates a DC voltage; and
a polarity voltage forming circuit that forms a polarity high voltage from the power supply, and applies a positive high voltage to the positive electrode and a negative high voltage to the negative electrode, and
a method for eliminating static electricity for a parts feeder that eliminates static electricity on workpieces, the parts feeder including an in-line feeder that conveys granular workpieces along a predetermined path, and a rotating drum that continuously drops a small number of fed workpieces onto a predetermined position on the in-line feeder,
the method including:
providing at least a pair of electrodes including a positive electrode and a negative electrode on the rotating drum near a predetermined position on the in-line feeder;
generating a high voltage to form positive and negative polarity high voltages; and
applying a positive high voltage to the positive electrode and a negative high voltage to the negative electrode.

### BRIEF DESCRIPTION OF THE DRAWINGS

FIG. 1 illustrates a configuration of an in-line feeder to which the present invention is applied;
FIG. 2 illustrates installation positions of electrodes around a rotating drum in the in-line feeder according to the present invention;
FIG. 3 is a block diagram of a configuration of a power supply used in an embodiment of the present invention;
FIG. 4A illustrates a state of adsorption of workpieces to the rotating drum before elimination of static electricity according to the present invention; and
FIG. 4B illustrates a state of adsorption of workpieces to the rotating drum after the elimination of static electricity according to the present invention.

### DETAILED DESCRIPTION OF THE INVENTION

Now, an embodiment of the present invention will be described with reference to the accompanying drawings.

### (First Embodiment)

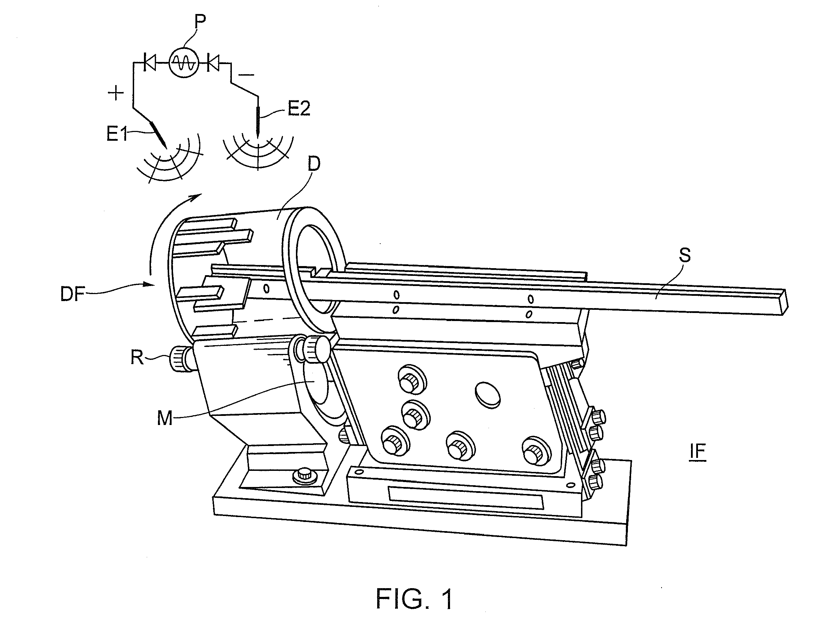

FIG. 1 shows a structure of an in-line feeder IF to which the present invention is applied. The in-line feeder IF includes a rotating drum type feeder DF at an end of a linear shoot S, and workpieces (not shown) are continuously fed from the rotating drum type feeder DF onto the shoot S.

The rotating drum type feeder DF includes a resin drum D placed so that an axis thereof is directed obliquely upward with respect to the shoot S, and driven by a motor M via a roller R, and fins for scooping the workpieces are provided in the drum D at appropriate intervals. Thus, when the drum D is rotated by the motor M, the fins inside scrape the workpiece fed from outside and drop the workpieces onto the shoot S.

At this time, high voltage electric fields are applied to the workpieces from a pair of electrodes E1 and E2 that are a positive electrode and a negative electrode placed on an outer periphery of the drum D and connected to a high voltage power supply P via diodes D1 and D2, thereby preventing the workpieces from being adsorbed to the drum D.

For the electric fields, a positive high voltage electric field is formed from the positive electrode, and a negative high voltage electric field is formed from the negative electrode, and the electric fields are applied to the workpieces in the drum D. Workpieces positively charged are neutralized by the negative electric field from the negative electrode, and workpieces negatively charged are neutralized by the positive electric field from the positive electrode, and thus static electricity is eliminated.

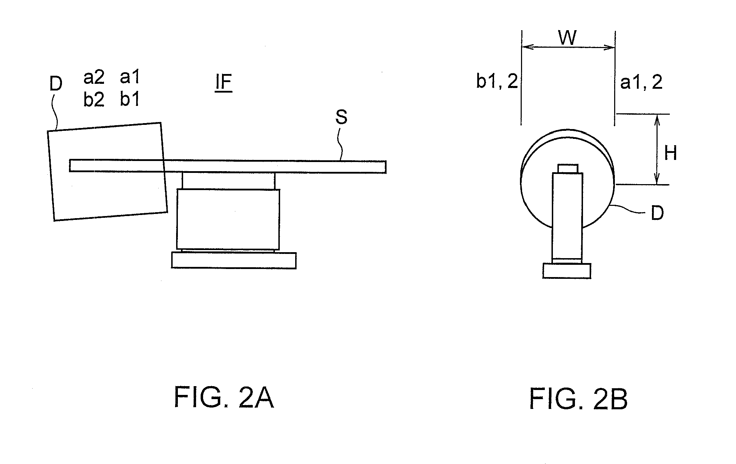

FIGS. 2A and 2B show only essential portions of the rotating drum type feeder DF. In this case, two pairs of electrode positions a1 and a2, and b1 and b2 are shown near the outer periphery of the drum D. This supposes a case where a pair of electrodes including a positive electrode and a negative electrode are placed in first positions a1 and b1, and a case where the electrodes are placed in second positions a2 and b2, for obtaining experiment data.

In the first positions a1 and b1, the electrodes are placed closer to an end of the drum D, and in the second positions a2 and b2, the electrodes are placed closer to the shoot on the drum D. In either case, a distance W between the electrodes is the same, and there are three kinds of distances between the drum D and the electrodes.

Specifically, data were obtained with the distance W between the electrodes E1 and E2 of 100 mm substantially equal to a diameter of the drum D, and three types of distances between the drum D and tips of the electrodes E1 and E2 of 70 mm, 110 mm, and 140 mm.

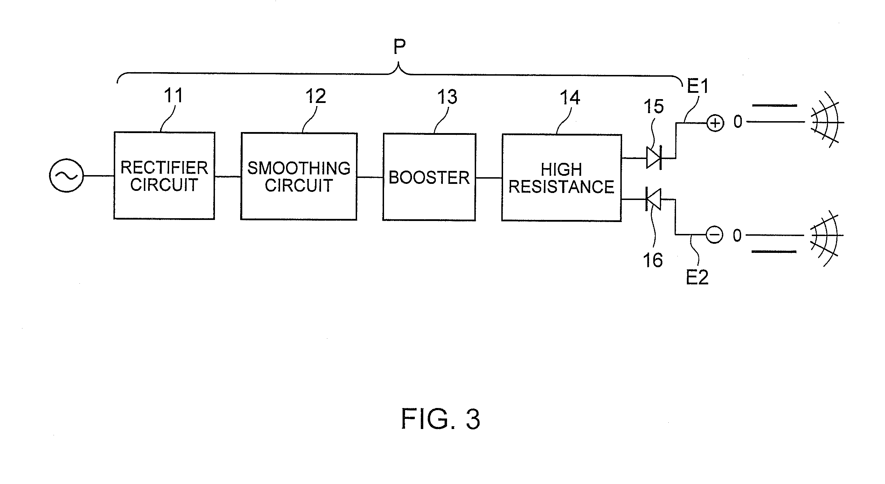

FIG. 3 shows a configuration of a power supply for forming a high voltage to be supplied between the electrodes E1 and E2. An output of an AC power supply is rectified by a rectifier circuit 11 and supplied to a smoothing circuit 12 to form a DC voltage, and the DC voltage is converted into a DC high voltage by a booster 13, and is supplied to the positive electrode E1 and the negative electrode E2 via high resistance 14.

The voltage is, for example, about 10,000 V.

The results of elimination of static electricity using this configuration and the output voltage thereof are as shown in Tables 1 and 2. As shown in Table 1, the electrode E1 placed in positions a 1 and a2 is positive, the electrode E2 placed in positions B1 and B2 is negative, and the workpieces are negatively charged.

### [Table 1]

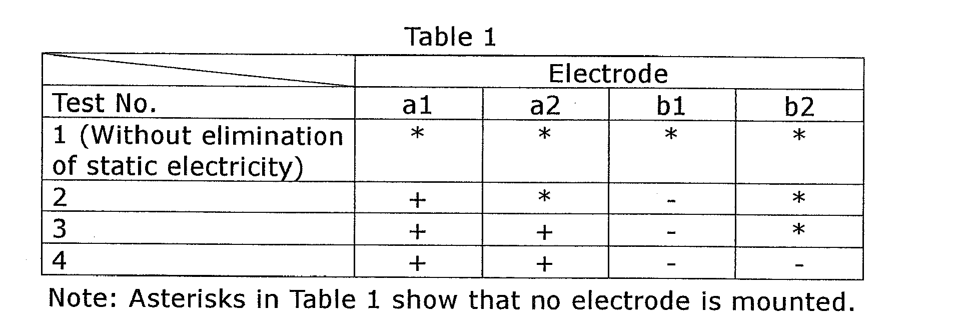

For the number of workpieces ejected, forty workpieces are ejected before charge, while the number of workpieces ejected after the charge is as shown in Table 2. Specifically, after the charge, the number of workpieces is reduced to twenty, which is half, in the first test without elimination of static electricity, while the number of workpieces is substantially the same as that before the charge in the second and fourth tests with the elimination of static electricity.

### [Table 2]

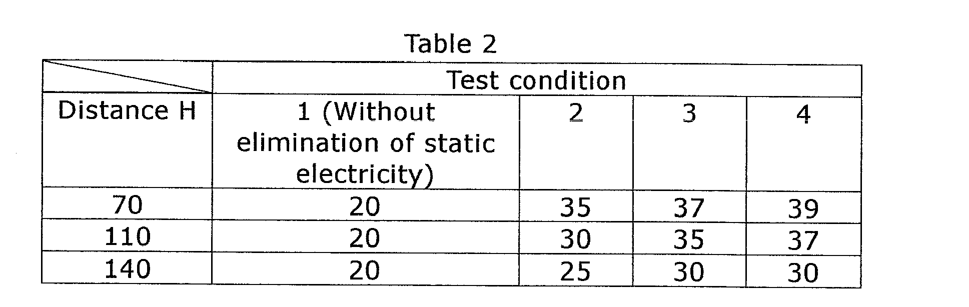

The results reveal that elimination of static electricity allows the number of ejected workpieces before the charge to be maintained though there are differences in advantage according to arrangement positions of the positive electrode E1 and the negative electrode E2 for elimination of static electricity, the distance between the electrodes and the drum D, or the like. The workpieces dropped onto a screening portion in the in-line feeder are in their natural positions without being restrained by static charges or the like, thereby allowing efficient screening and alignment.

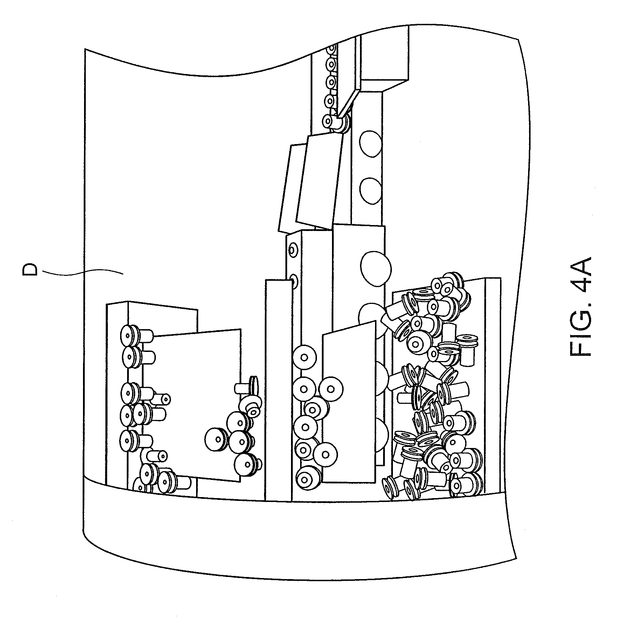

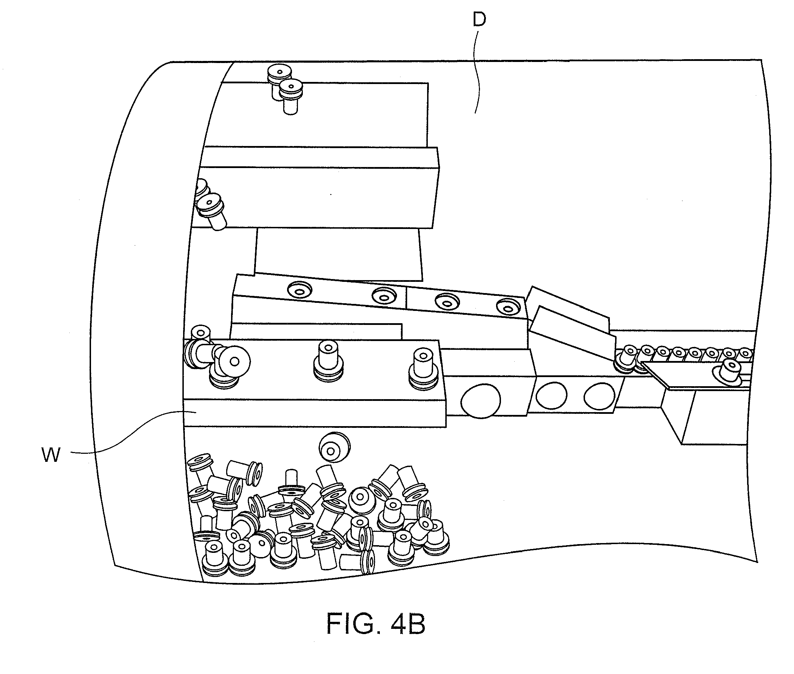

FIGS. 4A and 4B show changes in state of adsorption of the workpieces W to the drum D before and after the elimination of static electricity. In FIG. 4A showing the state before the elimination of static electricity, it can be seen that the workpieces are statically absorbed to an inner surface of the drum D without the elimination of static electricity, while in FIG. 4B showing the state after the elimination of static electricity, it can be seen that almost all of the workpieces drop and only a few workpieces W remain.

### (Variant)

In the embodiment, the AC power supply, the rectifier circuit, the smoothing circuit, the booster and the diodes are used for forming the polarity high voltage. However, a circuit configuration may be simplified so that a voltage of an AC power supply is appropriately boosted and rectified by a voltage doubler rectifier circuit.

In the present invention, as described above, at least the pair of electrodes are provided on the rotating drum near a predetermined position in the in-line feeder, and the positive high voltage electric field is applied to the workpieces from the positive electrode, and the negative high voltage electric field is applied to the workpieces from the negative electrode. Thus, the high voltage electric fields from the positive and negative electrodes act to neutralize static electricity on the workpieces, thereby preventing the workpieces from being absorbed to the rotating drum, and allowing the workpieces to be smoothly fed onto the in-line feeder.

## Claims

1. A device for eliminating static electricity for a parts feeder that eliminates static electricity on workpieces, said parts feeder including an in-line feeder that conveys granular workpieces along a predetermined path, and a rotating drum that continuously drops a small number of fed workpieces onto a predetermined position on said in-line feeder,
said device comprising:
at least a pair of electrodes including a positive electrode and a negative electrode provided on said rotating drum near a predetermined position on said in-line feeder;
a power supply that generates a DC voltage; and
a polarity voltage forming circuit that forms a polarity high voltage from said power supply, and applies a positive high voltage to said positive electrode and a negative high voltage to said negative electrode.

2. The device for eliminating static electricity for a parts feeder according to claim 1, wherein said electrodes are needle electrodes.

3. The device for eliminating static electricity for a parts feeder according to claim 1, wherein said pair of electrodes are provided so as to sandwich the predetermined path of said in-line feeder.

4. A method for eliminating static electricity for a parts feeder that eliminates static electricity on workpieces, said parts feeder including an in-line feeder that conveys granular workpieces along a predetermined path, and a rotating drum that continuously drops a small number of fed workpieces onto a predetermined position on said in-line feeder,
said method including:
providing at least a pair of electrodes including a positive electrode and a negative electrode on said rotating drum near a predetermined position on said in-line feeder;
generating a high voltage to form positive and negative polarity high voltages; and
applying a positive high voltage to said positive electrode and a negative high voltage to said negative electrode.
